(19) Europäisches Patentamt
European Patent Office
Office européen des brevets

(11) **EP 4 279 261 A1**

(12) **DEMANDE DE BREVET EUROPEEN**

(43) Date de publication:
**22.11.2023 Bulletin 2023/47**

(21) Numéro de dépôt: **23171351.2**

(22) Date de dépôt: **03.05.2023**

(51) Classification Internationale des Brevets (IPC):
**B32B 3/12** (2006.01)  **B32B 3/26** (2006.01)
**B32B 7/02** (2019.01)  **B32B 7/12** (2006.01)
**B64D 33/02** (2006.01)

(52) Classification Coopérative des Brevets (CPC):
**B32B 3/12; B32B 3/266; B32B 7/02; B32B 7/12;**
B32B 2250/05; B32B 2307/102; B32B 2307/732;
B32B 2605/18; B64D 2033/0206

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **16.05.2022 FR 2204604**

(71) Demandeur: **Airbus Operations SAS
31060 Toulouse (FR)**

(72) Inventeurs:
• **TEIGNE, Manuel
  31060 TOULOUSE (FR)**
• **GAUTHIER, Maxime
  31060 TOULOUSE (FR)**

(74) Mandataire: **Gevers & Orès
Immeuble le Palatin 2
3 Cours du Triangle
CS 80165
92939 Paris La Défense Cedex (FR)**

(54) **PANNEAU ACOUSTIQUE POUR AÉRONEF À LARGE BANDE DE FRÉQUENCE D'ATTÉNUATION DE BRUIT COMBINANT DEUX RÉSONATEURS ET PROCÉDÉ DE FABRICATION DU PANNEAU ACOUSTIQUE**

(57)  - Panneau acoustique pour aéronef à large bande de fréquence d'atténuation de bruit combinant deux résonateurs et procédé de fabrication du panneau acoustique.
- Le panneau acoustique (1) comprend une peau arrière (2), une structure alvéolaire (3), une couche intermédiaire (4) comportant des perforations (40), une structure alvéolaire (5), une structure alvéolaire (6) et une peau résistive (7) comportant des perforations (70). Le panneau acoustique (1) combine des résonateurs quart d'onde avec des résonateurs de Helmholtz, ce qui permet d'obtenir une atténuation du bruit sur une large plage de fréquence.

Fig. 1

EP 4 279 261 A1

## Description

## Domaine technique

La présente invention concerne un panneau acoustique pour aéronef permettant d'atténuer une large bande de fréquence de bruit et procédé de fabrication du panneau acoustique.

## État de la technique

On sait que, sur un aéronef, par exemple sur un avion de transport, des bruits importants sont souvent générés, notamment par les ensembles propulsifs de l'aéronef. Il est connu, pour réduire l'effet sonore produit par les ensembles propulsifs, de prévoir, en particulier au niveau des nacelles des ensembles propulsifs, des parois pourvues de panneaux présentant une bonne absorption acoustique. De façon usuelle, un panneau d'atténuation acoustique comprend généralement une plaque réalisée en un matériau et/ou une structure présentant de bonnes propriétés d'absorption acoustique, notamment pour les fréquences des bruits les plus gênants.

Cette plaque présente souvent une structure alvéolaire en nid d'abeilles et est munie sur ses deux faces, respectivement, d'une peau dite résistive souvent perforée et d'une peau arrière non perforée. La taille des alvéoles (section et hauteur) de la structure en nid d'abeilles est globalement adaptée à la fréquence du bruit à absorber.

Afin d'obtenir une absorption du bruit sur une large bande de fréquence, il existe des panneaux acoustiques qui combinent deux types de résonateur : le résonateur quart d'onde et le résonateur de Helmhotz.

Les panneaux acoustiques combinant ces deux résonateurs comprennent généralement deux structures alvéolaires séparées par une cloison en matériau composite à fibres de verre. Ils comprennent également une pluralité de tubes qui sont insérés dans toutes les alvéoles d'une des structures alvéolaires. Or, l'insertion des tubes dans toutes les alvéoles est une opération difficile à réaliser.

Le document FR 3111002 décrit également un panneau acoustique permettant de traiter différentes plages de fréquences. Ledit panneau acoustique comprend une structure alvéolaire dans lequel sont introduits des diaphragmes dans certaines alvéoles. Selon la disposition des diaphragmes dans les alvéoles, il est possible de traiter différentes plages de fréquences. Toutefois, l'intégration des diaphragmes ainsi que la détermination de leurs positionnements dans les alvéoles peuvent être fastidieux à mettre en oeuvre.

## Exposé de l'invention

La présente invention a pour objet de remédier à ces inconvénients. Pour cela, elle concerne un panneau acoustique pour aéronef.

Selon l'invention, le panneau acoustique comprend les éléments suivants selon un ordre de superposition des éléments fixés entre eux :

- une peau arrière pleine ;
- une première structure alvéolaire comportant un réseau d'alvéoles, chacune des alvéoles présentant une première section caractéristique et un premier axe longitudinal ;
- une couche intermédiaire comportant des premières perforations, chacune des premières perforations se présentant au droit d'une alvéole de la première structure alvéolaire, les premières perforations de la couche intermédiaire présentant une surface caractéristique strictement inférieure à la première section caractéristique ;
- une deuxième structure alvéolaire comportant un réseau d'alvéoles, chacune des alvéoles présentant une deuxième section caractéristique et un deuxième axe longitudinal parallèle au premier axe longitudinal, la deuxième section caractéristique étant strictement inférieure à la première section caractéristique ;
- une troisième structure alvéolaire comportant un réseau d'alvéoles, chacune des alvéoles présentant une troisième section caractéristique et un troisième axe longitudinal parallèle au deuxième axe longitudinal ;
- une peau résistive comportant des deuxièmes perforations.

Ainsi, le panneau acoustique combine deux ensembles de résonateurs : un ensemble de résonateurs quart d'onde grâce à la troisième structure alvéolaire et un ensemble de résonateurs de Helmholtz grâce à la première et la deuxième structure alvéolaire. Sa fabrication est facilitée car il n'est plus nécessaire d'insérer une pluralité de tubes dans toutes les alvéoles d'une des structures alvéolaire, ni de disposer des diaphragmes dans les alvéoles d'une structure alvéolaire.

De plus, chacune des premières perforations de la couche intermédiaire se présente au droit au moins d'une alvéole de la deuxième structure alvéolaire.

Selon un mode de réalisation, la couche intermédiaire correspond à une plaque perforée fixée à la première structure alvéolaire et à la deuxième structure alvéolaire.

Selon un autre mode de réalisation, la couche intermédiaire correspond à une couche d'adhésif perforée.

L'invention concerne également un procédé de fabrication d'un panneau acoustique d'aéronef tel que spécifié ci-dessus.

Selon l'invention, le procédé de fabrication comprend les étapes suivantes :

- une première étape de formage et de fixation comprenant le formage de la peau arrière et de la première structure alvéolaire dans un moule et la fixation de la peau arrière sur une première face de la première structure alvéolaire (3),

- une étape d'assemblage comprenant l'assemblage de la couche intermédiaire sur une deuxième face de la première structure alvéolaire et sur une première face de la deuxième structure alvéolaire, la deuxième face de la première structure alvéolaire étant opposée à la première face de la première structure alvéolaire,
- une deuxième étape de formage et de fixation comprenant le formage de la peau résistive et de la troisième structure alvéolaire dans le moule et la fixation de la peau résistive sur une première face de la troisième structure alvéolaire,
- une troisième étape de fixation comprenant la fixation d'une deuxième face de la deuxième structure alvéolaire sur une deuxième face de la troisième structure alvéolaire, la deuxième face de la deuxième structure alvéolaire étant opposée à la première face de la deuxième structure alvéolaire, la deuxième face de la troisième structure alvéolaire étant opposée à la première face de la troisième structure alvéolaire.

Dans un premier mode de réalisation, l'étape d'assemblage comprend les sous-étapes suivantes :

- une première sous-étape d'identification comprenant la détermination, par un dispositif d'identification, de positions de centres d'alvéoles de la première structure alvéolaire,
- une première sous-étape de formage et de fixation comprenant le formage d'une couche pleine et de la deuxième structure alvéolaire dans le moule et la fixation de la couche pleine sur la première face de la deuxième structure alvéolaire,
- une sous-étape de fixation de la couche pleine sur la deuxième face de la première structure alvéolaire à laquelle est fixée la peau arrière dans l'étape de formage et de fixation,
- une deuxième sous-étape d'identification comprenant la détermination, par le dispositif d'identification, de positions de centres d'alvéoles de la deuxième structure alvéolaire,
- une sous-étape d'application d'une couche d'adhésif sur la deuxième face de la deuxième structure alvéolaire, la couche d'adhésif étant perforée au droit de chacune des alvéoles de la deuxième structure alvéolaire,
- une sous-étape de perforation par un dispositif de perforation de la couche pleine pour obtenir la couche intermédiaire, la sous-étape de perforation comprenant une pluralité de premières perforations de la couche pleine à des positions correspondant à des positions déterminées dans la deuxième sous-étape d'identification les plus proches des positions déterminées dans première sous-étape d'identification ;

la troisième étape de fixation comprenant la fixation de la deuxième face de la deuxième structure alvéolaire sur la deuxième face de la troisième structure alvéolaire par l'intermédiaire de la couche d'adhésif appliquée lors de la sous-étape d'application.

Dans un deuxième mode de réalisation, l'étape d'assemblage comprend les sous-étapes suivantes :

- une première sous-étape de formage et de fixation comprenant le formage d'une couche pleine et de la deuxième structure alvéolaire dans le moule et la fixation de la couche pleine sur la première face de la deuxième structure alvéolaire,
- une sous-étape de fixation de la couche pleine sur la deuxième face de la première structure alvéolaire à laquelle est fixée la peau arrière dans l'étape de formage et de fixation,
- une sous-étape d'application d'une couche d'adhésif sur la deuxième face de la deuxième structure alvéolaire, la couche d'adhésif étant perforée au droit de chacune des alvéoles de la deuxième structure alvéolaire,
- une sous-étape de perforation par un dispositif de perforation de la couche pleine pour obtenir la couche intermédiaire, la sous-étape de perforation comprenant une pluralité de premières perforations de la couche pleine à des positions correspondant à un motif de positions prédéterminé répété régulièrement, le motif de positions étant prédéterminé en fonction du réseau d'alvéoles de la première structure alvéolaire ;

la troisième étape de fixation comprenant la fixation de la deuxième face de la deuxième structure alvéolaire sur la deuxième face de la troisième structure alvéolaire par l'intermédiaire de la couche d'adhésif appliquée lors de la sous-étape d'application.

Dans un troisième mode de réalisation, l'étape d'assemblage comprend les sous-étapes suivantes :

- une première sous-étape de formage comprenant le formage de la deuxième structure alvéolaire dans le moule,
- une première sous-étape d'application d'une couche d'adhésif pour former la couche intermédiaire, la première sous-étape d'application comprenant l'application de la couche d'adhésif sur la première face de la deuxième structure alvéolaire, la couche d'adhésif étant perforée à des positions correspondant à un motif de positions prédéterminé répété, le motif de positions étant prédéterminé en fonction du réseau d'alvéoles de la première structure alvéolaire,
- une sous-étape de fixation de la deuxième structure alvéolaire sur la première structure alvéolaire par l'intermédiaire de la couche d'adhésif appliquée dans la première sous-étape d'application.

Selon le troisième mode de réalisation, le procédé de fabrication comprend en outre une étape d'application d'une couche d'adhésif sur la deuxième face de la troisième structure alvéolaire, la couche d'adhésif étant perforée au droit de chaque alvéoles de la deuxième structure alvéolaire, l'étape d'application précédent la troisième étape de fixation, la troisième étape de fixation comprenant la fixation de la deuxième face de la deuxième structure alvéolaire sur la deuxième face de la troisième structure alvéolaire par l'intermédiaire de la couche d'adhésif appliquée lors de l'étape d'application.

L'invention concerne également un ensemble propulsif pour aéronef comportant au moins un panneau acoustique tel que décrit ci-dessus.

L'invention concerne aussi un aéronef comportant au moins un panneau acoustique tel que décrit ci-dessus.

**Brève description des figures**

Les figures annexées feront bien comprendre comment l'invention peut être réalisée. Sur ces figures, des références identiques désignent des éléments semblables.

La figure 1 représente une coupe transversale du panneau acoustique selon la présente invention.

La figure 2 représente une coupe transversale du panneau acoustique identique à celle de la figure 1.

La figure 3 comprend une figure a qui représente une vue de dessus de la première structure alvéolaire et des centres des alvéoles de la première structure alvéolaire ainsi qu'une figure b qui représente une vue de dessus de la deuxième structure alvéolaire et des centres des alvéoles de la deuxième structure alvéolaire.

La figure 4 représente une vue en perspective d'un panneau acoustique comprenant une pluralité de résonateurs quart d'onde.

La figure 5 représente une vue en perspective d'un résonateur de Helmholtz.

La figure 6 représente une coupe transversale du panneau acoustique au niveau d'une alvéole de la première structure alvéolaire et d'une alvéole de la troisième structure alvéolaire et de la propagation du bruit dans les structures alvéolaires.

La figure 7 représente schématiquement le procédé de fabrication du panneau acoustique selon un premier mode de réalisation.

La figure 8 représente schématiquement le procédé de fabrication du panneau acoustique selon un deuxième mode de réalisation.

La figure 9 représente schématiquement le procédé de fabrication du panneau acoustique selon un troisième mode de réalisation.

La figure 10 représente une vue de profil d'un aéronef équipé d'un ensemble propulsif comprenant un panneau acoustique selon la présente invention.

**Description détaillée**

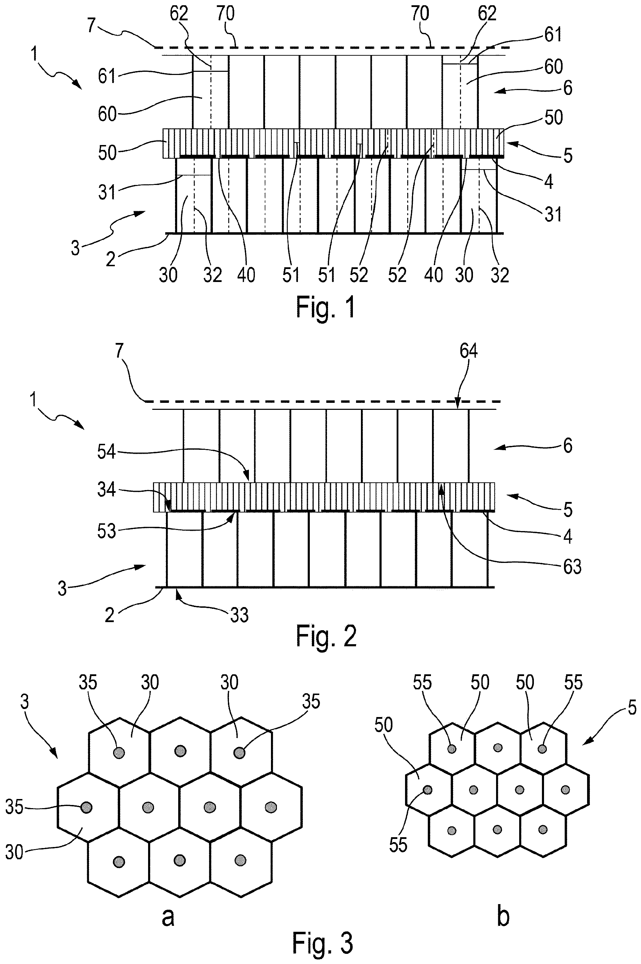

Le panneau acoustique 1 pour aéronef AC est représenté selon une coupe transversale sur la figure 1 et la figure 2.

Comme représenté sur la figure 1 et la figure 2, le panneau acoustique 1 comprend au moins, selon un ordre de superposition, une peau arrière 2 pleine, une structure alvéolaire 3, une couche intermédiaire 4, une structure alvéolaire 5, une structure alvéolaire 6 et une peau résistive 7 comportant des perforations 70. Ces éléments sont superposés et fixés entre eux, par exemple par une couche d'adhésif.

De façon non limitative, la peau arrière 2 peut avoir une épaisseur comprise entre 0,5 mm et 3 mm, de préférence 1 mm. La peau résistive peut avoir une épaisseur comprise entre 0,5 mm et 2 mm, par exemple, 0,55 mm.

La structure alvéolaire 3 comporte un réseau d'alvéoles 30. Chacune de ses alvéoles 30 présente une première section caractéristique 31 et un axe longitudinal 32. La première section caractéristique 31 correspond à la surface de la section transversale de l'alvéole 30, c'est-à-dire selon une section de l'alvéole 30 perpendiculaire à l'axe longitudinal 32.

La structure alvéolaire 5 comporte un réseau d'alvéoles 50. Chacune de ses alvéoles 50 présente une deuxième section caractéristique 51 et un axe longitudinal 52 sensiblement parallèle à l'axe longitudinal 32. La deuxième section caractéristique 51 est strictement inférieure à la première section caractéristique 31. La structure alvéolaire 6 comporte un réseau d'alvéoles 60. Chacune des alvéoles 60 présente une troisième section caractéristique 61 et un axe longitudinal 62 sensiblement parallèle à l'axe longitudinal 52.

La structure alvéolaire 5 et la structure alvéolaire 6 sont fixées entre elles par ladite couche d'adhésif appliquée à l'extrémité des parois formant les alvéoles 50 de la structure alvéolaire 5.

Une structure alvéolaire correspond à un réseau d'alvéoles 30, 50, 60 en forme de tube sensiblement identiques dont les axes longitudinaux 32, 52, 62 sont sensiblement parallèles les uns par rapport aux autres. Chacune des alvéoles 30, 50, 60 peut présenter plusieurs formes de section transversale.

Les structures alvéolaires 3, 5 et 6 peuvent correspondre à des structures en nid d'abeille. Dans ce cas, chacune des alvéoles 30, 50 et 60 correspond à un tube présentant une section caractéristique 31, 51 et 61 de forme sensiblement hexagonale. De façon non limitative, les structures alvéolaires 3, 5 et 6 peuvent être fabriquées en aluminium ou en fibres synthétiques hautes performances telles que le poly(m-phénylèneisophtalamide) (aussi connu sous le nom de « Nomex »).

La couche intermédiaire 4 comporte des perforations 40. Chacune des perforations 40 se présente au droit d'une alvéole 30 de la structure alvéolaire 3. Ainsi, toutes alvéoles 30 de la structure alvéolaire 3 sont ouvertes par une perforation 40. Les perforations 40 de la couche intermédiaire 4 présentent une surface caractéristique strictement inférieure à la première section caractéristique 31. Une surface caractéristique des perforations 40 correspond à une surface moyenne de toutes les perforations 40 de la couche intermédiaire 4.

De façon non limitative, les perforations 40 peuvent avoir un diamètre compris dans une plage allant de 1 mm à 5 mm, par exemple 3 mm.

Le panneau acoustique 1 combine donc deux ensembles de résonateurs.

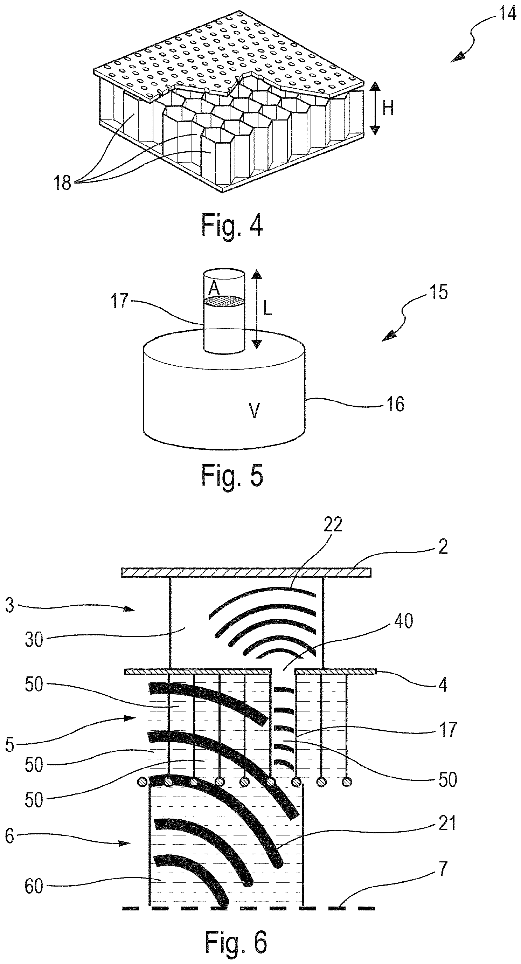

La structure alvéolaire 3 et la structure alvéolaire 5 forment un ensemble de résonateurs de Helmholtz 15 avec la couche intermédiaire 4. Un résonateur de Helmholtz 15 correspond à une cavité résonante 16 de volume V connectée par un col 17 de section A et de longueur L (figure 5). Le résonateur de Helmholtz 15 permet d'absorber un bruit ayant une fréquence de l'ordre de la fréquence caractéristique du résonateur. Cette fréquen-

$$f_0 = \frac{c}{2\pi}\sqrt{\frac{A}{VL}}$$

ce a pour expression                , dans laquelle c correspond à la vitesse du son. Étant donné que la deuxième section caractéristique 51 des alvéoles 50 de la structure alvéolaire 5 est strictement inférieure à la première section caractéristique 31 de la structure alvéolaire 3, plusieurs alvéoles 50 de la structure alvéolaire 5 sont au droit, au moins en partie, d'une alvéole 30 de la structure alvéolaire 3. Les perforations 40 de la plaque intermédiaire 4 permettent à une seule alvéole 50 ou au moins à une alvéole 50 de la structure alvéolaire 5 de communiquer avec une alvéole 30 de la structure alvéolaire 3. Les autres alvéoles 50 sont obturées si elles ne se trouvent pas au niveau d'une perforation 40. Ainsi, chacune des alvéoles 30 de la structure alvéolaire 3 forment une cavité résonante. Les alvéoles 50 de la structure alvéolaire 5 qui communiquent avec une alvéole 30 de la structure alvéolaire 3 forment chacune un col.

La structure alvéolaire 6 forme un ensemble 14 de résonateurs quart d'onde 18. Un résonateur quart d'onde 18 correspond à une cavité en forme de tube présentant une dimension longitudinale H de l'ordre de grandeur de l'inverse de la fréquence à absorber (figure 4).

Les alvéoles 50 de la structure alvéolaire 5 qui ne communiquent pas avec une alvéole 30 de la structure alvéolaire 3 peuvent également jouer le rôle de résonateurs quart d'onde ensembles avec les alvéoles 60 de la structure alvéolaire 6 avec lesquelles elles communiquent.

Comme représenté sur la figure 6, le bruit à atténuer pénètre dans le panneau acoustique 1 par la peau résistive 7. Le bruit 21 est d'abord atténué par le résonateur quart d'onde puis le bruit 22 est atténué par le résonateur de Helmholtz en passant par le col 17 formé par une alvéole 50 de la structure alvéolaire 5. Par ailleurs, les alvéoles 50 qui ne communiquant pas avec une alvéole 30 de la structure alvéolaire 3 peuvent également atténuer le bruit 21 en jouant le rôle de résonateurs quart d'onde.

Généralement le résonateur de Helmholtz atténue des fréquences inférieures aux fréquences du résonateur quart d'onde. La combinaison des deux résonateurs permet donc d'atténuer une grande plage de fréquences.

De façon non limitative, la première section caractéristique 31 et la troisième section caractéristique 61 peuvent être prévues pour que le diamètre de la surface de ces sections caractéristiques 31, 61 soit compris entre 15 mm et 25 mm, par exemple égal à 19 mm. Dans le cas d'alvéoles à section de forme hexagonale, le diamètre est égal à la distance entre deux côtés opposés de la forme hexagonale. Pour toute forme polygonale, le diamètre est égal à la distance la plus grande séparant deux côtés opposés. Pour toutes autres formes (par exemple une forme ovale), le diamètre correspond à la distance la plus grande séparant deux points de la circonférence ou la périphérie de la surface de la forme.

L'épaisseur de la structure alvéolaire 3 peut être comprise entre 5 mm et 25 mm, par exemple égale à 12 mm.

L'épaisseur de la structure alvéolaire 6 peut être comprise entre 5 mm et 30 mm, par exemple égale à 14 mm.

La deuxième section caractéristique 51 peut être prévue pour que le diamètre de la surface de cette section caractéristique 51 soit sensiblement égal à 3,2 mm. L'épaisseur de la structure alvéolaire 5 peut être comprise entre 5 mm et 15 mm, par exemple égale à 6 mm ou 11 mm.

Par exemple, la peau arrière 2 présente une épaisseur de 1 mm. La structure alvéolaire 3 présente une épaisseur de 12 mm avec un diamètre des alvéoles 30 de 19,1 mm. Chacune des alvéoles 30 forme une cavité 16 d'un résonateur de Helmholtz 15. La structure alvéolaire 5 présente une épaisseur de 11 mm avec un diamètre des alvéoles 50 égale à 3,2 mm. Chacune des alvéoles 50 qui communiquent avec une alvéole 30 forme un col 17 du résonateur de Helmholtz 15. La structure alvéolaire 6 présente une épaisseur de 25 mm avec un diamètre des alvéoles 60 de 19,1 mm. Chacune des alvéoles 60 forme un résonateur quart d'onde 18. La peau résistive 7 présente une épaisseur de 0,552 mm. Cet exemple permet d'atténuer des bruits dont les fréquences sont comprises dans une plage autour de 700 Hz.

Chacune des perforations 40 de la couche intermédiaire 4 peut se présenter au droit d'une alvéole 50 de la structure alvéolaire 5.

Toutefois, les performations 40 peuvent aussi se présenter au droit de plusieurs alvéoles 50 de la structure alvéolaire 5.

Selon un mode de réalisation, la couche intermédiaire 4 correspond à une plaque perforée fixée à la structure alvéolaire 3 et à la structure alvéolaire 5. Dans ce mode de réalisation, une couche d'adhésif fixe entre elles la couche intermédiaire 4 et la structure alvéolaire 3 et une autre couche d'adhésif fixe entre elles la couche intermédiaire 4 et la structure alvéolaire 5.

Selon un autre mode de réalisation, la couche intermédiaire 4 correspond à une couche d'adhésif perforée. Dans ce mode de réalisation, la couche d'adhésif fixe entre elles la structure alvéolaire 3 et la structure alvéolaire 5.

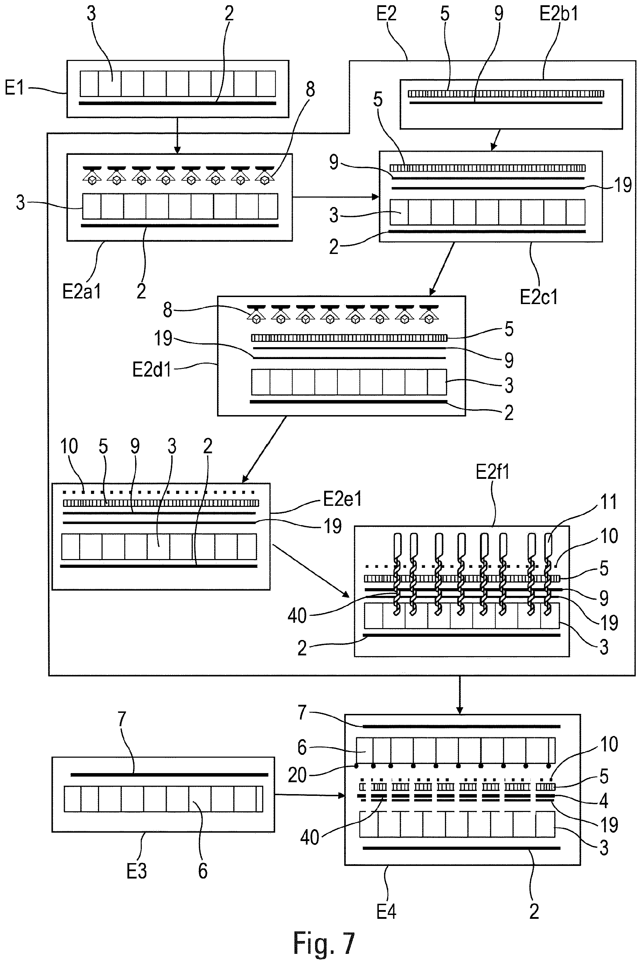

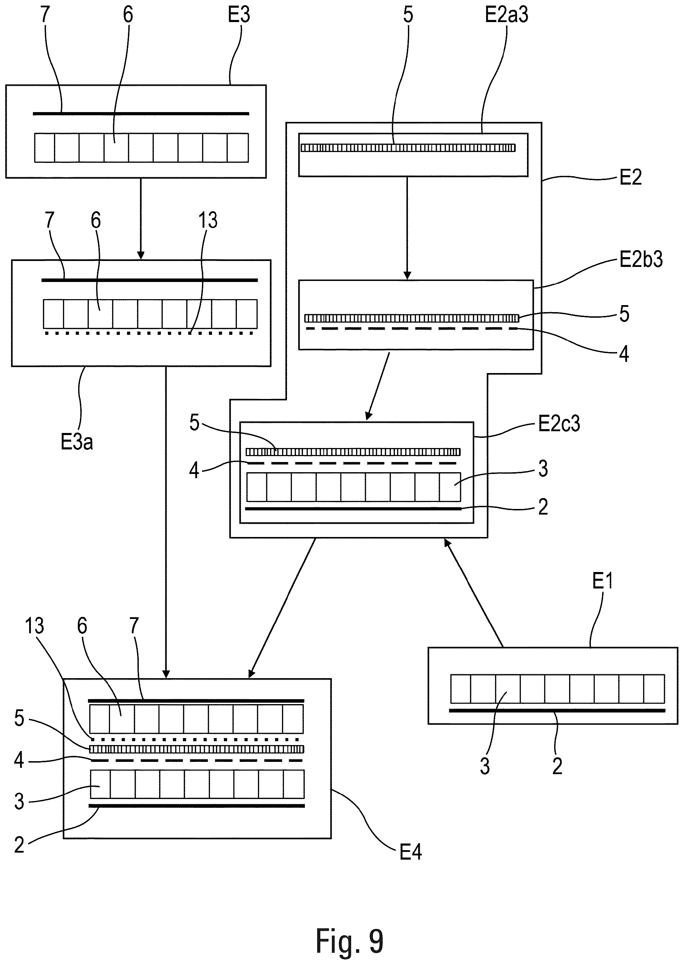

L'invention concerne également un procédé de fabrication d'un panneau acoustique d'aéronef AC (figure 7, figure 8 et figure 9).

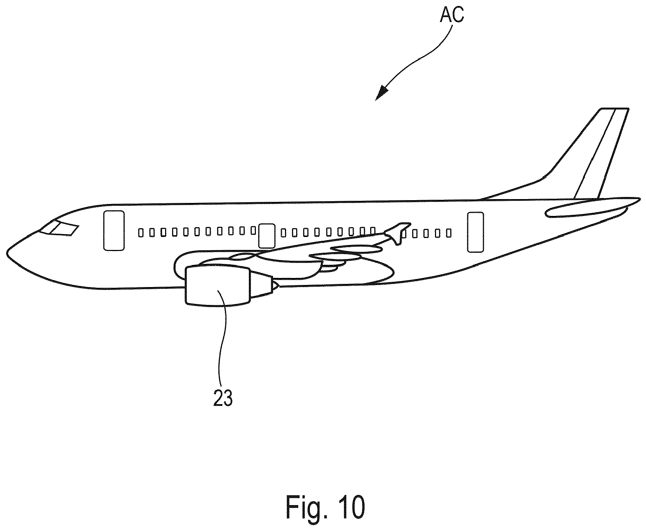

Le procédé de fabrication comprend une étape E1 de formage et de fixation. Cette étape E1 comprend le formage de la peau arrière 2 et de la structure alvéolaire 3 dans un moule. Le moule permet de former la peau arrière 2 et la structure alvéolaire 3 afin que le panneau acoustique 1 soit dans une forme souhaitée, telle que celle d'un bord d'attaque d'une nacelle d'un ensemble propulsif 23 de l'aéronef AC (figure 10). Cette étape E1 comprend également la fixation de la peau arrière 2 sur une première face 33 de la structure alvéolaire 3. Le formage et la fixation peuvent être réalisés en même temps dans le moule permettant le formage. Une couche d'adhésif est alors appliquée entre la peau arrière 2 et la structure alvéolaire 3.

Le procédé comprend en outre une étape E2 d'assemblage. Cette étape E2 comprend l'assemblage de la couche intermédiaire 4 sur une deuxième face 34 de la structure alvéolaire 3 et sur une première face 53 de la structure alvéolaire 5. La deuxième face 34 de la structure alvéolaire 3 est opposée à la première face 33 de la structure alvéolaire 3 (figure 2). Chacune des alvéoles 50 présente une première extrémité débouchant sur la première face 33 et une deuxième extrémité débouchant sur la deuxième face 34.

Le procédé comprend en outre une étape E3 de formage et de fixation. Cette étape E3 comprend le formage de la peau résistive 7 et de la structure alvéolaire 6 dans le moule. Comme pour l'étape E1, le moule permet de former la peau résistive 7 et la structure alvéolaire 6 afin que le panneau acoustique 1 soit dans une forme souhaitée. Cette étape E3 comprend également la fixation de la peau résistive 7 sur une première face 64 de la structure alvéolaire 6.

Le procédé comprend aussi une étape E4 de fixation. Cette étape E4 comprend la fixation d'une deuxième face 54 de la structure alvéolaire 5 sur une deuxième face 63 de la structure alvéolaire 6. La deuxième face 54 de la structure alvéolaire 5 est opposée à la première face 53 de la structure alvéolaire 5. Chacune des alvéoles 50 présente une première extrémité débouchant sur la première face 64 et une deuxième extrémité débouchant sur la deuxième face 63.La deuxième face 63 de la structure alvéolaire 6 est opposée à la première face 64 de la structure alvéolaire 6 (figure 2). Chacune des alvéoles 60 présente une première extrémité débouchant sur la première surface 33 et une deuxième extrémité débouchant sur la deuxième surface 34.Le formage et la fixation peuvent être réalisés en même temps dans le moule permettant le formage. Une couche d'adhésif est alors appliquée entre la peau résistive 7 et la structure alvéolaire 6.

Selon un premier mode de réalisation représenté sur la figure 7, l'étape E2 d'assemblage comprend une sous-étape E2a1 d'identification comprenant la détermination, par un dispositif d'identification 8, de positions de centres 35 d'alvéoles 30 de la structure alvéolaire 3. Par exemple, le dispositif d'identification 8 peut comprendre une caméra, un calculateur qui détermine la position des centres 35 des alvéoles 30 à partir des images captées par la caméra (figure 3a) et une mémoire destinée à stocker la position des centres 35 déterminés par le calculateur. La caméra est destinée à capter les images de la structure alvéolaire 3 dans un sens parallèle à l'axe longitudinal 32 de chacune des alvéoles 30.

Dans ce premier mode de réalisation, l'étape E2 d'assemblage comprend en outre une sous-étape E2b1 de formage et de fixation. Cette étape E2b1 comprend le formage d'une couche pleine 9 et de la structure alvéolaire 5 dans le moule. Comme pour l'étape E1, le moule permet de former la couche pleine 9 et la structure alvéolaire 5 afin que le panneau acoustique 1 soit dans une forme souhaitée. L'étape E2b1 comprend également la fixation de la couche pleine 9 sur la première face 53 de la structure alvéolaire 5. Le formage et la fixation peuvent être réalisés en même temps dans le moule permettant le formage. Une couche d'adhésif est alors appliquée entre la couche pleine 9 et la structure alvéolaire 5.

L'étape E2 d'assemblage comprend aussi une sous-étape E2c1 de fixation de la couche pleine 9 sur la deuxième face 34 de la structure alvéolaire 3 à laquelle est fixée la peau arrière 2 dans l'étape E1 de formage et de fixation. Cette sous-étape E2c1 peut être réalisée par l'application d'une couche d'adhésif 19 entre la couche pleine 9 et la structure alvéolaire 3.

L'étape E2 d'assemblage comprend aussi une sous-étape E2d1 d'identification comprenant la détermination, par le dispositif d'identification 8, de positions de centres 55 d'alvéoles 50 de la structure alvéolaire 5 (figure 3b). Par exemple, la caméra du dispositif d'identification 8 capte des images de la structure alvéolaire 5 dans un sens parallèle à l'axe longitudinal 52 de chacune des alvéoles 50. Le calculateur détermine alors la position des centres 55 des alvéoles 50 à partir des images captées par la caméra. La mémoire stocke ensuite la position des centres 55 déterminées par le calculateur.

L'étape E2 d'assemblage comprend aussi une sous-étape E2e1 d'application d'une couche d'adhésif 10 sur la deuxième face 54 de la structure alvéolaire 5. La couche d'adhésif 10 est perforée au droit de chacune des alvéoles 50 de la structure alvéolaire 5. Cela signifie que la couche d'adhésif 10 est appliquée à l'extrémité des parois formant les alvéoles 50 sur la deuxième face 54 de la structure alvéolaire 5. L'étape E2 d'assemblage comprend en outre une sous-étape E2f1 de perforation par un dispositif de perforation 11 de la couche pleine 9 pour obtenir la couche intermédiaire 4. La sous-étape de perforation E2f1 comprend une pluralité de perforations 40 de la couche pleine à des positions correspondant à des positions déterminées dans la sous-étape E2d1 d'identification les plus proches des positions déterminées dans sous-étape E2a1 d'identification.

Dans ce premier mode de réalisation, l'étape E4 de fixation comprend la fixation de la deuxième face 54 de la structure alvéolaire 5 sur la deuxième face 63 de la structure alvéolaire 6 par l'intermédiaire de la couche d'adhésif 10 appliquée lors de la sous-étape E2e1 d'application. Une couche d'adhésif 20 peut également être appliquée sur la deuxième face 63 de la structure alvéolaire 6. Cette couche d'adhésif 20 est appliquée à l'extrémité des parois formant les alvéoles 60 sur la deuxième face 63 de la structure alvéolaire 6.

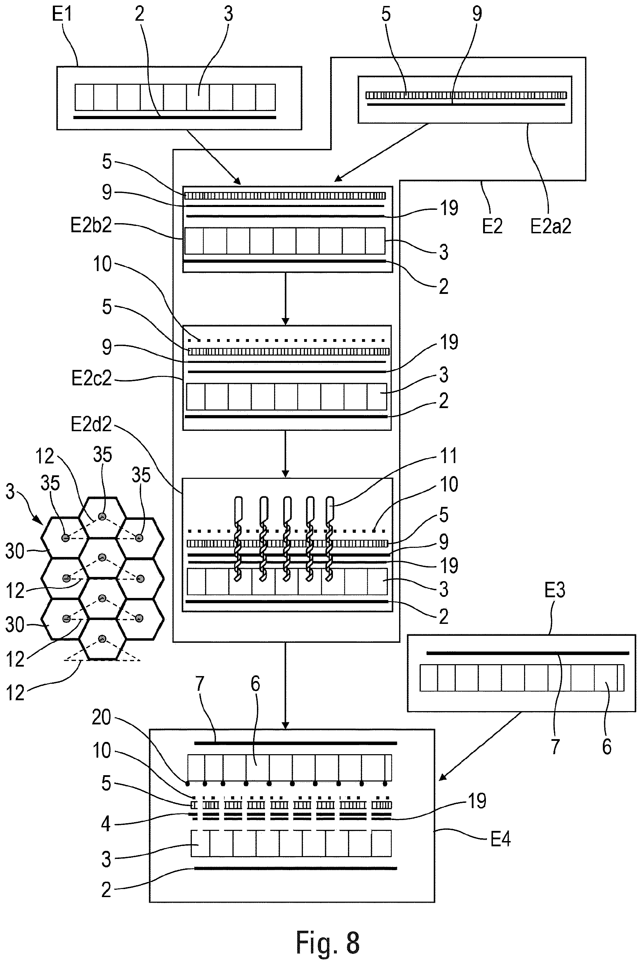

Selon un deuxième mode de réalisation représenté sur la figure 8, l'étape E2 d'assemblage comprend une sous-étape E2a2 de formage et de fixation.

Cette étape E2a2 comprend le formage d'une couche pleine 9 et de la structure alvéolaire 5 dans le moule. Comme pour l'étape E1, le moule permet de former la couche pleine 9 et la structure alvéolaire 5 afin que le panneau acoustique 1 soit dans une forme souhaitée. Cette étape E2a2 comprend également la fixation de la couche pleine 9 sur la première face 53 de la structure alvéolaire 5. Le formage et la fixation peuvent être réalisés en même temps dans le moule permettant le formage. Une couche d'adhésif est alors appliquée entre la couche pleine 9 et la structure alvéolaire 5.

L'étape E2 d'assemblage comprend aussi une sous-étape E2b2 de fixation de la couche pleine 9 sur la deuxième face 34 de la structure alvéolaire 3 à laquelle est fixée la peau arrière 2 dans l'étape E1 de formage et de fixation. Cette sous-étape E2b2 peut être réalisée par l'application d'une couche d'adhésif 19 entre la couche pleine 9 et la structure alvéolaire 3.

L'étape E2 d'assemblage comprend aussi une sous-étape E2c2 d'application d'une couche d'adhésif 10 sur la deuxième face 54 de la structure alvéolaire 5. La couche d'adhésif 10 est perforée au droit de chacune des alvéoles 50 de la structure alvéolaire 5. Cela signifie que la couche d'adhésif 10 est appliquée à l'extrémité des parois formant les alvéoles 50 sur la deuxième face 54 de la structure alvéolaire 5. L'étape E2 d'assemblage comprend en outre une sous-étape E2d2 de perforation par un dispositif de perforation 11 de la couche pleine 9 pour obtenir la couche intermédiaire 4. La sous-étape E2d2 de perforation comprend une pluralité de perforations 40 de la couche pleine à des positions correspondant à un motif de positions 12 prédéterminé répété régulièrement. Le motif de positions 12 est prédéterminé en fonction du réseau d'alvéoles 30 de la structure alvéolaire 3. Le motif de positions 12 correspond à un motif de positions représentatif des centres 35 des alvéoles 30 de la structure alvéolaire 3. La figure 8 représente un exemple de motif de positions 12. Dans cet exemple, le motif de positions 12 comprend trois positions de centres 35 disposées en triangle. Ce motif de positions 12 est répété régulièrement plusieurs fois sur toute la surface de la structure alvéolaire 3.

La structure alvéolaire 5 peut présenter des alvéoles 50 qui ne présentent pas toutes des géométries exactement identiques. Par conséquent, les perforations réalisées pendant la sous-étape E2d2 de perforation peuvent faire en sorte que les perforations 40 de la couche intermédiaire 4 peuvent se présenter au droit de plusieurs alvéoles 50 (deux à trois alvéoles 50) de la structure alvéolaire 5, puisque les centres 55 de la structure alvéolaire 5 ne sont pas identifiés ou repérés, comme cela est le cas pour le premier mode de réalisation du procédé. Cela entraîne une amplitude d'atténuation du bruit pour une fréquence de bruit qui est réduite (par exemple 700 Hz) mais la plage de fréquence de bruit qui est atténué est plus grande (par exemple de 1400 Hz à 2100 Hz). Cela peut être considéré comme un avantage.

Dans ce deuxième mode de réalisation, l'étape E4 de fixation comprend la fixation de la deuxième face 54 de la structure alvéolaire 5 sur la deuxième face 63 de la structure alvéolaire 6 par l'intermédiaire de la couche d'adhésif 10 appliquée lors de la sous-étape E2c2 d'application. Une couche d'adhésif 20 peut également être appliquée sur la deuxième face 63 de la structure alvéolaire 6. Cette couche d'adhésif 20 est appliquée à l'extrémité des parois formant les alvéoles 60 sur la deuxième face 63 de la structure alvéolaire 6.

Selon un troisième mode de réalisation du procédé, l'étape E2 d'assemblage comprend une sous-étape E2a3 de formage comprenant le formage de la structure alvéolaire 5 dans le moule. Comme pour l'étape E1, le moule permet de former la structure alvéolaire 5 afin que le panneau acoustique 1 soit dans une forme souhaitée.

L'étape E2 d'assemblage comprend également une sous-étape E2b3 d'application d'une couche d'adhésif pour former la couche intermédiaire 4. La sous-étape E2b3 d'application comprenant l'application de la couche d'adhésif sur la première face 53 de la structure alvéolaire 5. La couche d'adhésif est perforée à des positions correspondant à un motif de positions prédéterminé répété. Le motif de positions est prédéterminé en fonction du réseau d'alvéoles 30 de la structure alvéolaire 3. Comme pour le deuxième mode de réalisation, le motif de positions correspond à un motif de positions représentatif des centres 35 des alvéoles 30 de la structure alvéolaire 3. Ce motif de positions est répété régulièrement plusieurs fois sur toute la surface de la structure alvéolaire 3.

L'étape E2 d'assemblage comprend aussi une sous-étape E2c3 de fixation de la structure alvéolaire 5 sur la structure alvéolaire 3 par l'intermédiaire de la couche intermédiaire 4 qui correspond à une couche d'adhésif appliquée dans la sous-étape E2b3 d'application.

Par ailleurs le procédé selon le troisième mode de réalisation de l'étape E2 d'assemblage peut comprendre en outre une étape E3a d'application d'une couche d'adhésif 13 sur la deuxième face 63 de la structure alvéolaire 6. La couche d'adhésif 13 est perforée au droit de chaque alvéole 50 de la structure alvéolaire 5 de façon que cette couche d'adhésif 13 soit appliquée à l'extrémité des parois formant les alvéoles 50 sur la deuxième face 54 de la structure alvéolaire 5. Dans ce mode de réalisation, l'étape E3a d'application précède l'étape E4 de fixation. L'étape E4 de fixation comprend la fixation de la deuxième face 54 de la structure alvéolaire 5 sur la deuxième face 63 de la structure alvéolaire 6 par l'intermédiaire de la couche d'adhésif 13 appliquée lors de l'étape E3a d'application.

Le panneau acoustique 1 peut équiper le bord d'attaque d'une nacelle d'un ensemble propulsif 23 d'un aéronef AC (figure 10).

Ce panneau acoustique 1 ne nécessite plus l'introduction de tubes. Il présente une masse allégée par rapport au panneau acoustique nécessitant l'introduction de tubes. Par ailleurs, il permet de maintenir statistiquement de bonnes performances acoustiques et permet d'augmenter la plage de fréquence de bruit qui peut être atténué. Par ailleurs, sa fabrication est peu onéreuse.

**Revendications**

1. Panneau acoustique pour aéronef,
   **caractérisé en ce qu'**il comprend les éléments suivants selon un ordre de superposition des éléments fixés entre eux :

   - une peau arrière (2) pleine ;
   - une première structure alvéolaire (3) comportant un réseau d'alvéoles (30), chacune des alvéoles (30) présentant une première section caractéristique (31) et un premier axe longitudinal (32) ;
   - une couche intermédiaire (4) comportant des premières perforations (40), chacune des premières perforations (40) se présentant au droit d'une alvéole (30) de la première structure alvéolaire (3), les premières perforations (40) de la couche intermédiaire (4) présentant une surface caractéristique strictement inférieure à la première section caractéristique (31) ;
   - une deuxième structure alvéolaire (5) comportant un réseau d'alvéoles (50), chacune des alvéoles (50) présentant une deuxième section caractéristique (51) et un deuxième axe longitudinal (52) parallèle au premier axe longitudinal (32), la deuxième section caractéristique (51) étant strictement inférieure à la première section caractéristique (31) ;
   - une troisième structure alvéolaire (6) comportant un réseau d'alvéoles (60), chacune des alvéoles (60) présentant une troisième section caractéristique (61) et un troisième axe longitudinal (62) parallèle au deuxième axe longitudinal (52) ;
   - une peau résistive (7) comportant des deuxièmes perforations (70).

2. Panneau selon la revendication 1,
   **caractérisé en ce que** chacune des premières perforations (40) de la couche intermédiaire (4) se présente au droit au moins d'une alvéole (50) de la deuxième structure alvéolaire (5).

3. Panneau selon l'une quelconque des revendications 1 et 2,
   **caractérisé en ce que** la couche intermédiaire (4) correspond à une plaque perforée fixée à la première structure alvéolaire (3) et à la deuxième structure alvéolaire (5).

4. Panneau selon l'une quelconque des revendications 1 et 2,
   **caractérisé en ce que** la couche intermédiaire (4) correspond à une couche d'adhésif perforée.

5. Procédé de fabrication d'un panneau acoustique d'aéronef selon l'une quelconque des revendications 1 à 4,
   **caractérisé en ce qu'**il comprend les étapes suivantes :

   - une première étape (E1) de formage et de fixation comprenant le formage de la peau arrière (2) et de la première structure alvéolaire (3) dans un moule et la fixation de la peau arrière (2) sur une première face (33) de la première structure alvéolaire (3) ;
   - une étape (E2) d'assemblage comprenant l'assemblage de la couche intermédiaire (4) sur une deuxième face (34) de la première structure alvéolaire (3) et sur une première face (53) de la deuxième structure alvéolaire (5), la deuxième face (34) de la première structure alvéolaire (3) étant opposée à la première face (33) de la première structure alvéolaire (3) ;
   - une deuxième étape (E3) de formage et de fixation comprenant le formage de la peau résistive (7) et de la troisième structure alvéolaire (6) dans le moule et la fixation de la peau résistive (7) sur une première face (64) de la troisième structure alvéolaire (6) ;
   - une troisième étape (E4) de fixation comprenant la fixation d'une deuxième face (54) de la deuxième structure alvéolaire (5) sur une deuxième face (63) de la troisième structure alvéolaire (6), la deuxième face (54) de la deuxième structure alvéolaire (5) étant opposée à la première face (53) de la deuxième structure alvéolaire (5), la deuxième face (63) de la troisième structure alvéolaire (6) étant opposée à la première face (64) de la troisième structure alvéolaire (6).

6.    Procédé selon la revendication 5, **caractérisé en ce que** l'étape (E2) d'assemblage comprend les sous-étapes suivantes :

- une première sous-étape (E2a1) d'identification comprenant la détermination, par un dispositif d'identification (8), de positions de centres (35) d'alvéoles (30) de la première structure alvéolaire (3),
- une première sous-étape (E2b1) de formage et de fixation comprenant le formage d'une couche pleine (9) et de la deuxième structure alvéolaire (5) dans le moule et la fixation de la couche pleine (9) sur la première face (53) de la deuxième structure alvéolaire (5),
- une sous-étape (E2c1) de fixation de la couche pleine (9) sur la deuxième face (34) de la première structure alvéolaire (3) à laquelle est fixée la peau arrière (2) dans l'étape (E1) de formage et de fixation,
- une deuxième sous-étape (E2d1) d'identification comprenant la détermination, par le dispositif d'identification, de positions de centres (55) d'alvéoles (50) de la deuxième structure alvéolaire (5),
- une sous-étape (E2e1) d'application d'une couche d'adhésif (10) sur la deuxième face (54) de la deuxième structure alvéolaire (5), la couche d'adhésif étant perforée au droit de chacune des alvéoles (50) de la deuxième structure alvéolaire (5),
- une sous-étape (E2f1) de perforation par un dispositif de perforation (11) de la couche pleine (9) pour obtenir la couche intermédiaire (4), la sous-étape de perforation (E2f1) comprenant une pluralité de premières perforations (40) de la couche pleine à des positions correspondant à des positions déterminées dans la deuxième sous-étape (E2d1) d'identification les plus proches des positions déterminées dans première sous-étape (E2a1) d'identification ;

la troisième étape (E4) de fixation comprenant la fixation de la deuxième face (54) de la deuxième structure alvéolaire (5) sur la deuxième face (63) de la troisième structure alvéolaire (6) par l'intermédiaire de la couche d'adhésif (10) appliquée lors de la sous-étape (E2e1) d'application.

7.    Procédé selon la revendication 5, **caractérisé en ce que** l'étape (E2) d'assemblage comprend les sous-étapes suivantes :

- une première sous-étape (E2a2) de formage et de fixation comprenant le formage d'une couche pleine (9) et de la deuxième structure alvéolaire (5) dans le moule et la fixation de la couche pleine sur la première face (53) de la deuxième structure alvéolaire (5),
- une sous-étape (E2b2) de fixation de la couche pleine (9) sur la deuxième face (34) de la première structure alvéolaire (3) à laquelle est fixée la peau arrière (2) dans l'étape (E1) de formage et de fixation,
- une sous-étape (E2c2) d'application d'une couche d'adhésif (10) sur la deuxième face (54) de la deuxième structure alvéolaire (5), la couche d'adhésif (10) étant perforée au droit de chacune des alvéoles (50) de la deuxième structure alvéolaire (5),
- une sous-étape (E2d2) de perforation par un dispositif de perforation (11) de la couche pleine (9) pour obtenir la couche intermédiaire (4), la sous-étape (E2d2) de perforation comprenant une pluralité de premières perforations (40) de la couche pleine à des positions correspondant à un motif de positions (12) prédéterminé répété régulièrement, le motif de positions (12) étant prédéterminé en fonction du réseau d'alvéoles (30) de la première structure alvéolaire (3) ;

la troisième étape (E4) de fixation comprenant la fixation de la deuxième face (54) de la deuxième structure alvéolaire (5) sur la deuxième face (63) de la troisième structure alvéolaire (6) par l'intermédiaire de la couche d'adhésif (10) appliquée lors de la sous-étape (E2c2) d'application.

8.    Procédé selon la revendication 5, **caractérisé en ce que** l'étape (E2) d'assemblage comprend les sous-étapes suivantes :

- une première sous-étape (E2a3) de formage comprenant le formage de la deuxième structure alvéolaire (5) dans le moule,
- une première sous-étape (E2b3) d'application d'une couche d'adhésif pour former la couche intermédiaire (4), la première sous-étape (E2b3) d'application comprenant l'application de la couche d'adhésif sur la première face (53) de la deuxième structure alvéolaire (5), la couche d'adhésif étant perforée à des positions correspondant à un motif de positions prédéterminé répété, le motif de positions étant prédéterminé en fonction du réseau d'alvéoles (30) de la première structure alvéolaire (3),
- une sous-étape (E2c3) de fixation de la deuxième structure alvéolaire (5) sur la première structure alvéolaire (3) par l'intermédiaire de la couche d'adhésif appliquée dans la première sous-étape (E2b3) d'application.

**9.** Procédé selon l'une quelconque des revendications 5 et 8,
**caractérisé en ce qu'**il comprend en outre une étape (E3a) d'application d'une couche d'adhésif (13) sur la deuxième face (63) de la troisième structure alvéolaire (6), la couche d'adhésif étant perforée au droit de chaque alvéoles (50) de la deuxième structure alvéolaire (5), l'étape (E3a) d'application précédent la troisième étape (E4) de fixation, la troisième étape (E4) de fixation comprenant la fixation de la deuxième face (54) de la deuxième structure alvéolaire (5) sur la deuxième face (63) de la troisième structure alvéolaire (6) par l'intermédiaire de la couche d'adhésif (13) appliquée lors de l'étape (E3a) d'application.

**10.** Ensemble propulsif pour aéronef,
**caractérisé en ce qu'**il comporte au moins un panneau acoustique (1) selon l'une quelconque des revendications 1 à 4.

**11.** Aéronef,
**caractérisé en ce qu'**il comporte au moins un panneau acoustique (1) selon l'une quelconque des revendications 1 à 4.

Fig. 1

Fig. 2

Fig. 3

Fig. 4

Fig. 5

Fig. 6

Fig. 7

Fig. 8

Fig. 9

AC

23

Fig. 10

Europäisches
Patentamt

European
Patent Office

Office européen
des brevets

## RAPPORT DE RECHERCHE EUROPEENNE

Numéro de la demande

**EP 23 17 1351**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 100 917 A1 (SAFRAN NACELLES [FR]) 19 mars 2021 (2021-03-19) * alinéas [0001], [0014] – [0050], [0069] – [0096], [0103] – [0105] * * revendications 1-14 * * figures 2-4,7,8a-8e * ----- | 1-11 | INV. B32B3/12 B32B3/26 B32B7/02 B32B7/12 B64D33/02 |
| A | WO 2009/115700 A1 (AIRCELLE SA [FR]; CAZUC XAVIER [FR]; VALLEROY LAURENT GEORGES [FR]) 24 septembre 2009 (2009-09-24) * page 1, ligne 3 – ligne 8 * * page 2, ligne 28 – page 3, ligne 27 * * page 5, ligne 23 – page 7, ligne 6 * * page 8, ligne 3 – ligne 12 * * revendications 1-8 * * figures 4-6 * ----- | 1-11 | |
| A | US 2019/071164 A1 (PENN TIMOTHY DUSTIN [US] ET AL) 7 mars 2019 (2019-03-07) * alinéas [0001], [0009], [0017] – [0020], [0048] – [0051] * * revendications 1-20 * * figure 1 * ----- | 1-11 | |

DOMAINES TECHNIQUES RECHERCHES (IPC)

B32B

Le présent rapport a été établi pour toutes les revendications

| Lieu de la recherche | Date d'achèvement de la recherche | Examinateur |
|---|---|---|
| La Haye | 13 septembre 2023 | Girard, Sarah |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 17 1351

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-09-2023

| Document brevet cité au rapport de recherche | Date de publication | Membre(s) de la famille de brevet(s) | Date de publication |
|---|---|---|---|
| FR 3100917 A1 | 19-03-2021 | FR 3100917 A1<br>FR 3100918 A1 | 19-03-2021<br>19-03-2021 |
| WO 2009115700 A1 | 24-09-2009 | FR 2928415 A1<br>WO 2009115700 A1 | 11-09-2009<br>24-09-2009 |
| US 2019071164 A1 | 07-03-2019 | BR 112020004689 A2<br>CA 3075298 A1<br>EP 3679232 A1<br>US 2019071164 A1<br>US 2022024555 A1<br>WO 2019050680 A1 | 15-09-2020<br>14-03-2019<br>15-07-2020<br>07-03-2019<br>27-01-2022<br>14-03-2019 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 3111002